# EUROPEAN PATENT APPLICATION

(11) **EP 4 550 107 A1**
(43) Date of publication of application: **07.05.2025**
(21) Application number: 24197894.9
(22) Date of filing: 02.09.2024
(51) Int. Cl.: G06F 3/06

(54) **MULTI-DOMAIN STORAGE DEVICE PERFORMING DOMAIN BALANCING OPERATION AND OPERATION METHOD THEREOF**

(30) Priority: 01.11.2023 KR 20230148806
(71) Applicant: Samsung Electronics Co., Ltd, Suwon-si, Gyeonggi-do 16677 (KR)
(72) Inventor: JO, Jungjeong, 16677 Suwon-si, Gyeonggi-do (KR); LEE, Geontaek, 16677 Suwon-si, Gyeonggi-do (KR); KIM, In-Su, 16677 Suwon-si, Gyeonggi-do (KR); SHIN, Beomkyu, 16677 Suwon-si, Gyeonggi-do (KR); JEONG, Jaeyong, 16677 Suwon-si, Gyeonggi-do (KR)
(74) Representative: Kuhnen & Wacker Patent- und Rechtsanwaltsbüro PartG mbB

(57) **Abstract**

A storage device (1200) configured to perform address mapping in a multi-domain manner includes a non-volatile memory device (1230) including a plurality of dies associated with a first domain or a second domain, and a storage controller (1210) configured to map a logical address of a write request to a first physical address mapped to the first domain. Responsive to detecting concentration of a workload or resource corresponding to the write request in the first domain at a reference rate or more, the storage controller (1210) is configured to redirect the first physical address mapped to the first domain to a second physical address assigned to the second domain.

## Description

### FIELD

Embodiments of the present disclosure described herein relates to a storage device, and more specifically, to a multi-domain storage device that performs domain balancing operation and a method of operating the same.

### BACKGROUND

As storage capacity increases, multi-domain address mapping is being applied to storage such as solid state drive (hereinafter referred to as SSD). As the storage capacity of the SSD increases, the size of the mapping table for address mapping also increases. As the size of the mapping table increases, the capacity of DRAM that stores the mapping table must also increase. When using multi-domain address mapping, the mapping table may be independently allocated to each of the multiple domains. Applying this method may have the effect of reducing the maximum capacity of the physical address to be managed, thereby reducing the size of the entire mapping table.

However, depending on the workload of the host system, input/output I/O requests may be concentrated in a specific domain of the SSD. The overall performance of the SSD may be limited depending on the performance limitations of the domain where I/O requests are concentrated.

### SUMMARY

Embodiments of the present disclosure may be directed to cases where I/O requests are concentrated in one domain during multi-domain address mapping. Embodiments of the present disclosure provide a multi-domain storage device that performs domain balancing operation and a method of operating the same.

According to an embodiment of the present invention, a storage device configured to perform address mapping in a multi-domain manner includes a non-volatile memory device including a plurality of dies, wherein the dies or memory blocks thereof are associated with a first domain or a second domain; and a storage controller configured to map a logical address of a write request to a first physical address mapped to the first domain, and responsive to detecting concentration of a workload or resource corresponding to the write request in the first domain at a reference rate or more, redirect a portion of the first physical address mapped to the first domain to a second physical address assigned to the second domain.

According to an embodiment of the present invention, a method of operating a storage device to perform address mapping according to a multi-domain method includes receiving a write request, detecting load imbalance among a plurality of domains according to the write request, where the plurality of domains are associated with respective subsets of memory dies or memory blocks thereof, generating a new stream in addition to an existing stream of a first domain of which a load is concentrated above a reference value, among the plurality of domains, and redirecting a target physical address of the new stream to a memory block included in a second domain among the plurality of domains.

According to an embodiment of the present invention, a storage device configured to perform address mapping in a multi-domain manner includes a non-volatile memory device including a plurality of dies, wherein the dies or memory blocks thereof are associated with a first domain or a second domain, a storage controller configured to map a logical address of a write request to a first physical address mapped to the first domain, and responsive to detecting concentration of a load corresponding to the write request in a first domain at a reference rate or more, redirect a portion of the first physical address mapped to the first domain to a second physical address assigned to the second domain, and a buffer memory configured to store a mapping table that maps logical addresses to a physical addresses, wherein the storage controller comprises a domain distributor configured to allocate a physical address of a die among the plurality of dies to write the write-requested data of the write request to the first domain or the second domain by referring to a specific bit of the logical address, an input/output monitor configured to monitor whether a workload or resource corresponding to the write request is concentrated in the first domain at a rate greater than the reference rate, and a domain redirection unit configured to redirect the portion of the first physical address mapped to the first domain to the second physical address assigned to the second domain.

### BRIEF DESCRIPTION OF THE DRAWINGS

The above and other objects and features of the present disclosure will become apparent by describing in detail embodiments thereof with reference to the accompanying drawings.
FIG. 1 is a block diagram showing a storage system including a memory device of the present invention.
FIG. 2 is a block diagram exemplarily showing the storage device of FIG. 1.
FIG. 3 is a block diagram illustrating the configuration of the non-volatile memory device shown in FIG. 2.
FIG. 4 is a block diagram showing the structure of the non-volatile memory device of the present invention.
FIG. 5 is a diagram schematically showing a domain redirection method in the multi-domain mapping of the present invention.
FIG. 6 is a diagram briefly showing the entry size of a mapping table added for domain redirection of the present invention.
FIG. 7 is a diagram showing the domain redirection effect according to an embodiment of the present invention.
FIG. 8 is a flowchart showing a domain redirection method activated when domain imbalance is detected according to an embodiment of the present invention.
FIG. 9 is a block diagram showing another configuration method of the storage controller of FIG. 1.
FIG. 10 is a flowchart showing a domain redirection operation according to another embodiment of the present invention.
FIG. 11 is a table showing an example of a write distribution method according to the imbalance ratio for each domain.
FIG. 12 is a table showing another example of a write distribution method according to the imbalance ratio for each domain.
FIG. 13 is a block diagram showing a storage system according to an embodiment of the present invention.

### DETAILED DESCRIPTION OF EMBODIMENTS

It is to be understood that both the foregoing general description and the following detailed description are exemplary, and it is to be considered that an additional description of the claimed invention is provided. Reference signs are indicated in detail in preferred embodiments of the present invention, examples of which are indicated in the reference drawings. Wherever possible, the same reference numbers are used in the description and drawings to refer to the same or like parts. The terms "first," "second," etc., may be used herein merely to distinguish one component, layer, direction, etc. from another. The terms "comprises," "comprising," "includes" and/or "including," when used herein, specify the presence of stated elements, but do not preclude the presence of additional elements. The term "and/or" includes any and all combinations of one or more of the associated listed items. The term "connected" may be used herein to refer to a physical and/or electrical connection. When components or layers are referred to herein as "directly" on, or "in direct contact" or "directly connected," no intervening components or layers are present. Likewise, when components are "immediately" adjacent to one another, no intervening components may be present.

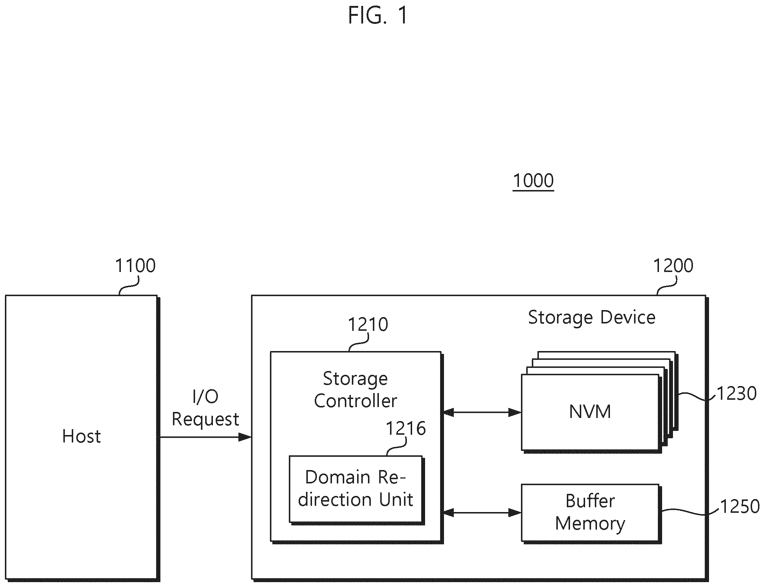

FIG. 1 is a block diagram showing a storage system including a memory device of the present invention. The storage system 1000 may include a host 1100 and a storage device 1200. And the storage device 1200 includes a storage controller 1210, a non-volatile memory device 1230, and a buffer memory 1250.

The host 1100 can manage and process overall operations of the storage system 1000. The host 1100 may transmit a read or write request to the storage device 1200. That is, the host 1100 transmits an I/O request. To this end, the host 1100 may generate a write command or a read command. The host 1100 may perform various arithmetic/logical operations to access the storage device 1200. For example, host 1100 may include one or more processor cores. The host 1100 may be implemented using a dedicated circuit such as field programmable gate arrays FPGA or application specific integrated circuit ASIC, or may be implemented as a system on chip SoC. The host 1100 may include a general-purpose processor, a dedicated processor, or an application processor. The host 1100 may be the processor itself or an electronic device or system including the processor.

The storage device 1200 may include a storage controller 1210, a non-volatile memory device 1230, and a buffer memory 1250. The storage controller 1210 may program data in the non-volatile memory device 1230 according to a write request from the host 1100. Alternatively, the storage controller 1210 may read data stored in the non-volatile memory device 1230 according to a read request from the host 1100. To this end, the storage controller 1210 manages a mapping table that defines the correspondence between the logical address and physical address of data stored (or to be stored) in the non-volatile memory device 1230. For example, the storage controller 1210 may manage a logical-block-address (LBA) to physical-block-address mapping table to record mapping relationships between logical addresses (managed by the host 1100) and physical addresses (managed by the storage controller 1210). The mapping table may be a table or other data structure that includes a logical address associated with each memory location in the non-volatile memory device 1230 where data is stored. The mapping table is mainly stored and managed in the buffer memory 1250 provided as DRAM.

The storage controller 1210 may perform the function of a flash translation layer FTL. By using the flash translation layer FTL, shortcomings of the non-volatile memory device 1230, such as erase-before-write and mismatch between erase units and write units, can be compensated for. In particular, the flash translation layer FTL maps the logical address generated by the file system of the host 1100 to the physical address of the non-volatile memory device 1230. In addition, the flash translation layer FTL performs wear leveling to manage the lifespan of the non-volatile memory device 1230 and garbage collection to manage data capacity.

In particular, the storage controller 1210 uses a multi-domain method when mapping addresses. As used herein, a "domain" may refer to a group of memory regions, for example, a group of memory blocks or a group of memory dies. For example, a first subset of the memory blocks or dies may be associated with a first domain, and a second subset of the memory blocks or dies may be associated with a second domain. As the capacity of the non-volatile memory device 1230 increases, the size of the mapping table for mapping logical addresses to physical addresses also increases. Accordingly, the capacity of the buffer memory 1250 that stores the mapping table must also increase. In order to reduce or minimize the increase in cost due to the size of the mapping table, one of the techniques for reducing the size of the mapping table is the multi-domain mapping technique.

According to multi-domain mapping, a first mapping table and a second mapping table can be configured according to specific bits of the logical address (e.g., a LBA) transmitted from the host 1100. Different processors are assigned to each of the first mapping table and the second mapping table to process mapping operations. Here, the first mapping table maps logical addresses to the first die group (i.e., to physical addresses corresponding to the first die group) of the non-volatile memory device 1230. On the other hand, the second mapping table maps logical addresses to a second die group (i.e., to physical addresses corresponding to the second die group) that is physically separated from the first die group. Through this multi-domain address mapping, the mapping table of each domain can be reduced by at least 1-bit.

In the multi-domain method described above, the logical addresses of input/output requests provided from the host 1100 may be concentrated in one domain. This phenomenon in which input/output requests are concentrated in a specific domain is referred to as domain imbalance or domain skew. When domain imbalance occurs, a write operation occurs only or is concentrated in one domain, and thus the performance of the storage device 1200 is limited to the operation performance of the domain where input/output requests are concentrated. In addition, the utilization rate of domains with low workloads decreases, and thus wear leveling characteristics deteriorate.

When such domain imbalance occurs, the storage controller 1210 of the present invention can access memory blocks or dies managed by one or more idle domains by creating a new stream for input/output requests. Using the new stream, the domain redirection unit 1216 can redirect the logical address of the input/output request from the physical address of the busy domain to the physical address of an idle domain (e.g., from a first physical address of a first domain to a second physical address of a second domain) in case of domain imbalance. The domain balancing functions of the storage controller 1210 will be described in more detail through the drawings described later.

The non-volatile memory device 1230 may store data received from the storage controller 1210 or transmit the stored data to the storage controller 1210 under the control of the storage controller 1210. The non-volatile memory device 1230 may include a plurality of dies, and each die may include a plurality of memory blocks. In the non-volatile memory device 1230, only one memory block is selected from one die during a write operation. Therefore, selecting one die during a write operation can be used in the same sense as selecting one memory block. Here, each of the plurality of memory blocks may have a three-dimensional memory structure in which word line layers are stacked in a vertical direction on the substrate. Each of the plurality of memory blocks can be managed by the storage controller 1210 through information for wear leveling, such as an erase count (hereinafter referred to as EC).

The buffer memory 1250 provides a buffer function or a metadata load function of the storage device 1200. Additionally, the buffer memory 1250 may support a direct memory access (DMA) function for data exchanged between the non-volatile memory device 1230 and the host 1100. That is, the buffer memory 1250 provides a buffer function to temporarily store data programmed in the non-volatile memory device 1230 or data output from the non-volatile memory device 1230. In particular, the buffer memory 1250 can store a mapping table or various meta data generated by the storage controller 1210. The buffer memory 1250 of the present invention can load a multi-domain mapping table.

According to the above-described configuration, the storage device 1200 of the present invention can perform a load balancing function between first and second domains within the storage device when input/output requests from the host 1100 are concentrated in the first domain. Accordingly, performance degradation due to load concentration on a specific domain in the storage device 1200 with a multi-domain structure and reduction in utilization and lifespan of the non-volatile memory device 1230 can be prevented.

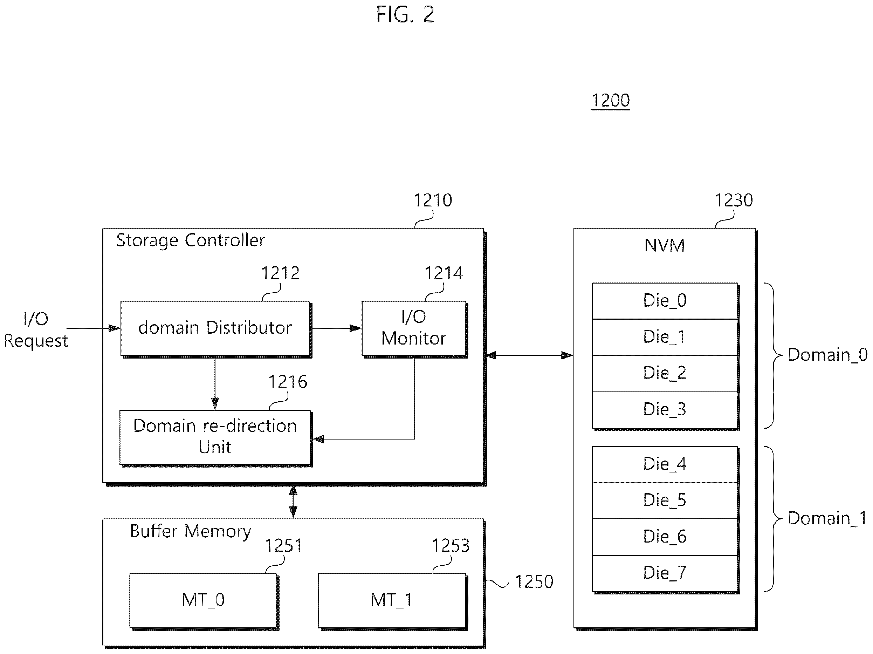

FIG. 2 is a block diagram exemplarily showing the storage device of FIG. 1. Referring to FIG. 2, the storage device 1200 may include a storage controller 1210, a non-volatile memory device 1230, and a buffer memory 1250. By way of example, the storage controller 1210, the non-volatile memory device 1230, and the buffer memory 1250 may each be provided as one chip, one package, or one module or circuit. Alternatively, the storage controller 1210, non-volatile memory device 1230, and buffer memory 1250 may be included in one chip, one package, or one module or circuit. That is, the storage controller 1210, non-volatile memory device 1230, and buffer memory 1250 may be composed of storage devices such as embedded memory, memory card, memory stick, and solid state drive SSD.

The storage controller 1210 may be configured to control the non-volatile memory device 1230 and the buffer memory 1250. For example, the storage controller 1210 may write data to the non-volatile memory device 1230 or read data stored in the non-volatile memory device 1230 at the request of the host 1100 (see FIG. 1). To access the non-volatile memory device 1230, the storage controller 1210 may receive an I/O request such as a read command or a write command. Then I/O request from the host 1100 may include a logical address (LBA or LPN (logical page number)).

In particular, the storage controller 1210 performs multi-domain address mapping on the logical address from the host 1100. At this time, input/output requests may be concentrated in one domain based on the logical address. In this case, the storage controller 1210 may detect a situation in which input/output requests to a specific domain are concentrated (hereinafter referred to as domain skew or domain imbalance). When domain skew is detected, the storage controller 1210 redirects the mapping of physical blocks (or dies) concentrated in one domain to physical blocks in another idle domain. Hereinafter, when such input/output requests are concentrated in a specific domain, the operation of generating additional streams and distributing them to idle domains will be referred to as a domain balancing operation. For this domain balancing operation, the storage controller 1210 may include a domain distributor 1212, an input/output monitor 1214, and a domain redirection unit 1216.

The domain distributor 1212 distributes domains according to the logical address accompanying the I/O Request. For example, when operating two domains (Domain_0, Domain_1), the domain distributor 1212 can configure the first mapping table (MT_0, 1251) and the second mapping table (MT_1, 1253) according to specific bits (e.g., LSB) of the logical address LBA included in the input/output request (I/O Request). The first mapping table MT_0 will map logical addresses to physical addresses of memory blocks (or dies) corresponding to the first domain Domain _0. And the second mapping table MT_1 will map logical addresses to physical addresses of memory blocks (or dies) corresponding to the second domain Domain_1. That is, the domain distributor 1212 maps the input logical address LBA to the first domain Domain_0 when a specific bit of the logical address LBA is logical '0' (or even). And when a specific bit of the logical address LBA is logical '1' (or odd), the domain distributor 1212 maps the input logical address LBA to the second domain Domain_1. However, the input logical address (LBA or LPN) is not provided in domain balance. Therefore, domain imbalance may occur depending on the logical address (LBA or LPN).

The input/output monitor 1214 detects domain imbalance (or skew) generated by the domain distributor 1212. The input/output monitor 1214 can monitor input/output performance for each domain. For example, the input/output monitor 1214 can monitor the workload or resources of each of the domains (Domain_0 and Domain_1). If it is observed that the workload or resources are concentrated in one domain, the input/output monitor 1214 may provide the monitoring result to the domain redirection unit 1216.

The domain redirection unit 1216 may redirect the logical address of the input/output request from the busy domain to the idle domain according to the monitoring result of the input/output monitor 1214. For example, the concentration of write requests to the first domain Domain_0 may be detected by the input/output monitor 1214. Then, the domain redirection unit 1216 may reallocate the mapping of the logical address designating the first domain Domain_0 to a memory block (or die) of the second domain Domain_1. For this operation, the domain redirection unit 1216 may open a new stream and map the physical address of the new stream to memory blocks (or dies) of the second domain Domain_1. For address mapping of a new stream, the domain redirection unit 1216 may create an additional mapping table.

The non-volatile memory device 1230 includes a plurality of dies Die_0 to Die_7 implemented as flash memory. A plurality of dies Die_0 to Die_7 may each be divided into domain units. The dies Die_0 to Die_3 may correspond to the first domain Domain_0, and the dies Die_4 to Die_7 may constitute the second domain Domain_1. The dies Die_0 to Die_3 constituting the first domain Domain _0 are connected to the first channel, allowing simultaneous or pipelined write operations. In addition, the dies Die_4 to Die_7 constituting the second domain Domain _1 are connected to the second channel, allowing simultaneous or pipelined write operations. That is, each domain can be assigned to a stream capable of simultaneous write operations.

The buffer memory 1250 may include a first mapping table MT_0 and a second mapping table MT_1. The first mapping table MT_0 may map a logical address to a physical address area corresponding to the first domain Domain _0. And the second mapping table MT_1 can map the logical address to the physical address area corresponding to the second domain Domain_1. In particular, when domain redirection occurs as domain imbalance is detected, an additional mapping table may be created in addition to the first mapping table MT_0 or the second mapping table MT_1. The additional mapping table plays the role of remapping or redirecting the physical block mapping of a domain in which input/output requests are concentrated to an idle domain.

Therefore, even when input/output requests from the host 1100 are concentrated in one domain by the storage device 1200 described above, load balance between domains can be implemented. Accordingly, in the storage device 1200 having a multi-domain structure, performance degradation due to load concentration on a specific domain and reduction in usage rate or lifespan of dies can be reduced or prevented.

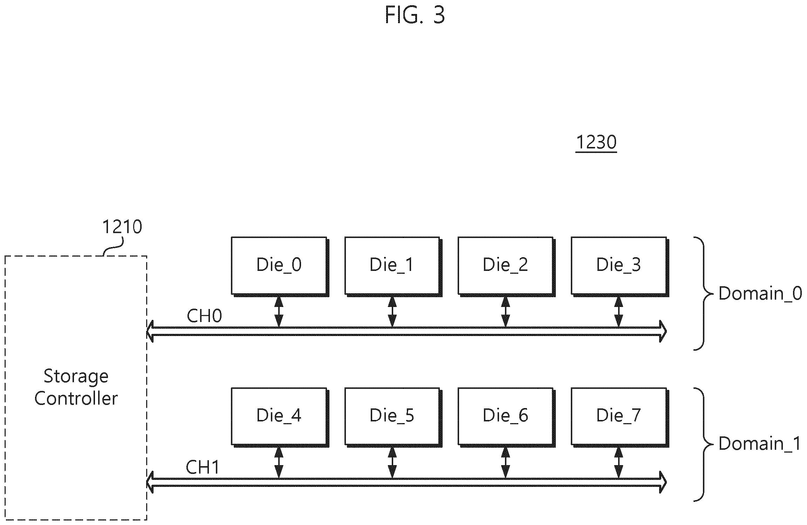

FIG. 3 is a block diagram illustrating the configuration of the non-volatile memory device shown in FIG. 2. Referring to FIG. 3, the non-volatile memory device 1230 may include a plurality of dies Die_0 to Die_7.

A plurality of dies Die_0 to Die_7 may be arranged in a multi-channel structure. In the present invention, for convenience of explanation, it is assumed that a plurality of dies Die_0 to Die_7 are arranged in a 2-channel structure. For example, the dies Die_0 to Die_3 are connected to the first channel CH0, and the dies Die_4 to Die_7 are connected to the second channel CH1. Dies Die_0 to Die_3 connected to the first channel CH0 constitute the first domain Domain_0, and dies Die_4 to Die_7 connected to the second channel CH1 constitute the second domain Domain_1. The write speed of each die Die_0 to Die_7 implemented as a flash memory device is relatively slow. However, write performance can be improved by providing write commands and write data to dies connected to one channel in a pipeline. In other words, when write commands and data are sequentially provided to each die Die_0 to Die_3, the time required for a write operation for each die is the same, but the write speed for all four dies can be increased.

When one stream is opened according to these channel properties, the data of the opened stream is allocated on a domain basis, thereby ensuring high write performance. That is, when performing address mapping for a write request in a multi-domain manner, the storage controller 1210 may open the first stream Stream_0 allocated to the first domain Domain_0. Then, the data of the first stream Stream_0 is mapped to the physical address of the first domain Domain_0, thereby enabling high-speed writing operations.

In particular, when using the domain redirection method of the present invention, a physical address of or corresponding to a busy domain may be redirected to an idle domain even if or when domain imbalance occurs. Accordingly, the overhead caused by domain imbalance of the present invention can be prevented. Here, the non-volatile memory device 1230 constituting two channels has been described as an example, but the present invention is not limited to the number of channels specifically described herein. It will be appreciated that various numbers of dies may be connected to three or more channels in various embodiments.

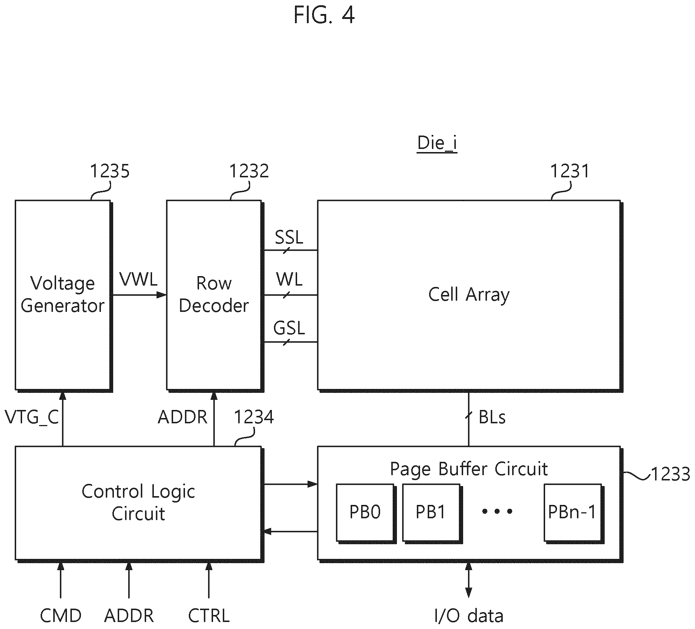

FIG. 4 is a block diagram briefly showing the structure of the non-volatile memory device of the present invention. Referring to FIG. 4, the structure of one non-volatile memory die Die_i implemented as a flash memory device is shown. The non-volatile memory die Die_i may include a cell array 1231, a row decoder 1232, a page buffer circuit 1233, a control logic circuit 1234, and a voltage generator 1235. Although not shown in FIG. 4, the non-volatile memory device 1230 may further include a data input/output circuit or an input/output interface. Additionally, the non-volatile memory device 1230 may further include components such as column logic, a pre-decoder, a temperature sensor, a command decoder, and an address decoder.

The cell array 1231 may include a plurality of memory blocks. Each of the plurality of memory blocks may include a plurality of memory cells. A plurality of memory blocks may be included in one memory plane, but the present invention is not limited thereto. The cell array 1231 may be connected to the row decoder 1232 through the page buffer circuit 1233, bit lines BLs, word lines WL, string select lines SSL, and ground select lines GSL. In an example embodiment, the cell array 1231 may include a three-dimensional memory cell array.

The row decoder 1232 may select one of the memory blocks of the cell array 1231 in response to the address ADDR. The row decoder 1232 may select one of the word lines of the selected memory block in response to the address ADDR. The row decoder 1232 delivers a voltage VWL corresponding to the operation mode to the word line of the selected memory block. During a program operation, the row decoder 1232 supply the program voltage and verification voltage to the selected word line and the pass voltage to the unselected word line. During a read operation, the row decoder 1232 delivers a read voltage to the selected word line and a read pass voltage to the unselected word line.

The page buffer circuit 1233 may include a plurality of page buffers PB0 to PBn-1. A plurality of page buffers PB0 to PBn-1 may be respectively connected to memory cells through a plurality of bit lines BLs. The page buffer circuit 1233 may select at least one bit line among the bit lines BLs in response to the column address. The page buffer circuit 1233 may operate as a write driver or a sense amplifier depending on the operation mode. For example, during a program operation, the page buffer circuit 1233 may apply a bit line voltage corresponding to data to be programmed to the selected bit line. During a read operation, the page buffer circuit 1233 may detect data stored in a memory cell by detecting the current or voltage of the selected bit line.

The control logic circuit 1234 can generally control various operations within the non-volatile memory device 1230. The control logic circuit 1234 programs data into the cell array 1231 or reads data from the cell array 1231 in response to a control signal CTRL, a command CMD, and/or an address ADDR. Alternatively, various control signals for erasing data stored in the cell array 1231 may be output. For example, the control logic circuit 1234 may output a voltage control signal VTG_C, the address ADDR, etc. In an exemplary embodiment, the control logic circuit 1234 may output control signals for programming multi-bit data according to the received control signal CTRL, command CMD, and/or the address ADDR.

The voltage generator 1235 may generate various types of voltages to perform program, read, and erase operations based on the voltage control signal VTG_C. For example, the voltage generator 1235 may generate a program voltage, a read voltage, and a program verification voltage as the word line voltage VWL. For example, the program voltage may be generated using an incremental step pulse program ISPP method.

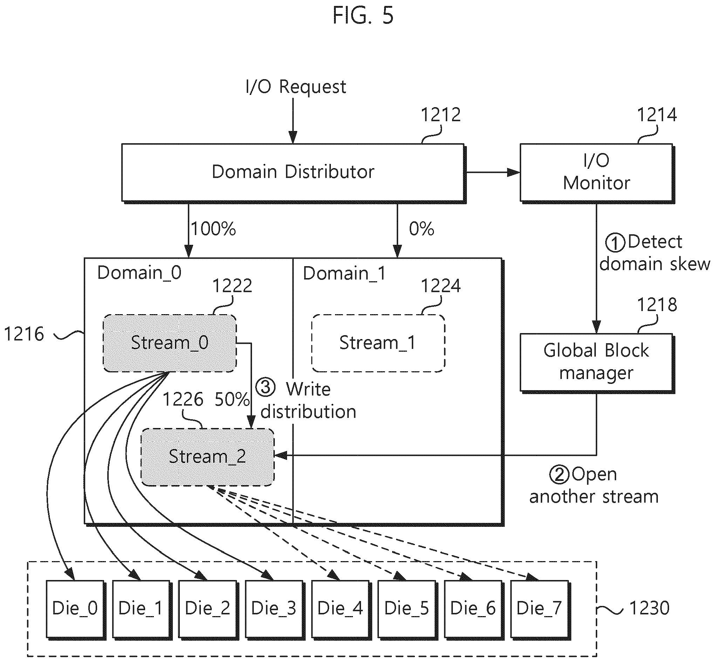

FIG. 5 is a diagram schematically showing a domain redirection method in the multi-domain mapping of the present invention. Referring to FIG. 5, a method of resolving imbalance through domain redirection according to the present invention when input/output requests are concentrated in the first domain Domain 0 is shown.

Logical addresses corresponding to input/output requests can be mapped in a multi-domain manner. At this time, logical addresses according to input/output requests may be concentrated in the first domain Domain _0 among the domains Domain _0 and Domain_1. In the illustrated example, 100% of input/output requests are concentrated in the first domain Domain_0. The domain distributor 1212 opens a first stream Stream_0 in the first domain Domain_0 for programming data requested to be written in an input/output request. Additionally, the domain distributor 1212 opens a second stream (Stream_1, 1224) in the second domain Domain_1 for programming the data requested to be written in the input/output request. And the domain distributor 1212 will allocate a memory block to each of the dies Die_0 to Die_3 into which the write data of the first stream (Stream_0, 1222) will be written. Dies Die_0 to Die_3 correspond to block addresses mapped to the first domain Domain_0.

However, domain imbalance will be detected by the input/output monitor 1214. The input/output monitor 1214 transmits detection of domain imbalance (e.g., by generating and transmitting a detection signal indicating the domain imbalance) to the global block manager 1218. Then, the global block manager 1218 opens the third stream Stream _2 in the first domain Domain_0 to resolve the detected domain imbalance. The third stream Stream_2 may be mapped to share the size of the write load (e.g., in half) with the first stream Stream _0. And the input/output monitor 1214 redirects the physical address of the third stream Stream_2 to the second domain Domain_1. Then, the physical address where the data of the third stream Stream_2 will be written is mapped to the dies Die_4 to Die_7 of the second domain Domain_1.

In conclusion, the write load can be more evenly distributed to the dies Die_0 to Die_7 of the non-volatile memory device 1230 by generating the third stream mapped to the second domain Domain 1.

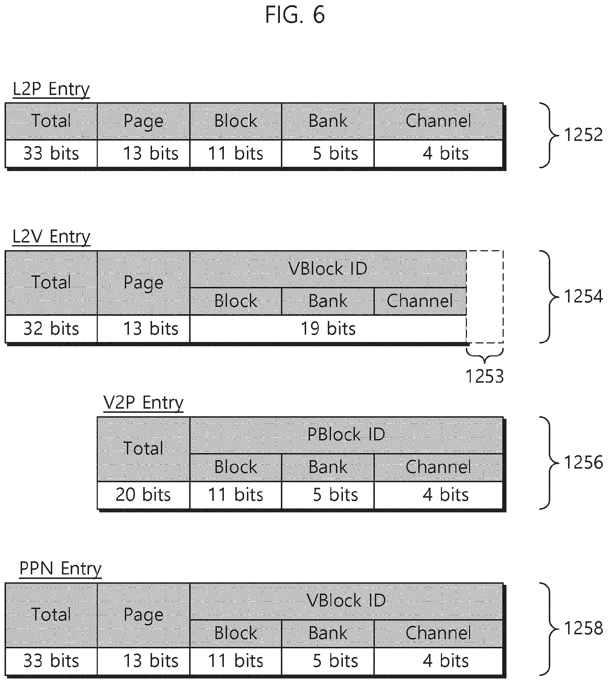

FIG. 6 is a diagram briefly showing the entry size of a mapping table added for domain redirection of the present invention. Referring to FIG. 6, when domain imbalance occurs, an additional mapping table 1256 for domain redirection of the present invention can be used.

The mapping table entry 1252 shows the map size in the single domain structure mapping method. For example, when mapping a logical address directly to a physical address, 13 bits are required for page mapping, 11 bits for block mapping, 5 bits for bank mapping, and 4 bits for channel mapping. Therefore, the size of the mapping table must be provided as 33 bits.

On the other hand, the bit 1253 for selecting a domain is excluded from the mapping table entry 1254 of the multi-domain structure. Therefore, since only a mapping table for one domain needs to be configured, the size of the mapping table can be reduced.

The mapping table entry 1256 represents a mapping table added for domain redirection from one domain (e.g., a first domain) to another domain (e.g., a second domain). The size of the added mapping table may be, for example, 20 bits. It shows that the number of entries for selecting a memory block of another domain within one domain can be implemented even with a 20-bit size.

The mapping table entry 1258 shows the size of the entry specifying the physical page address. The entry of the physical page address can also be provided in 33 bits like the mapping table entry 1252.

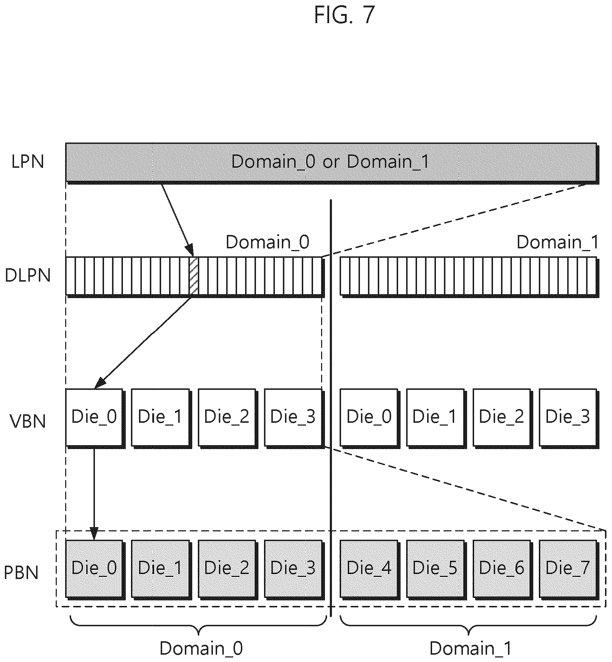

FIG. 7 is a diagram showing the domain redirection effect according to an embodiment of the present invention. Referring to FIG. 7, even though the logical address LPN corresponds to the first domain Domain_0, when domain redirection is activated, memory dies Die_4 to Die_7 of the second domain Domain_1 can be mapped to physical blocks.

In this example, the logical address LPN of the input/output request delivered to the storage controller 1210 using multi-domain address mapping corresponds to the first domain Domain_0. Then, the domain distributor 1212 allocates the provided logical address LPN to the logical address DLPN of the first domain Domain _0. A virtual block address VBN may select dies Die_0 to Die_3 included in the first domain Domain_0 according to the logical address DLPN assigned to the first domain Domain_0. However, when domain imbalance is detected and the domain redirection of the present invention is activated, even though the logical address LPN corresponds to the first domain Domain_0, the physical address PBN may actually be mapped to the dies Die_4 to Die_7 of the second domain Domain_1.

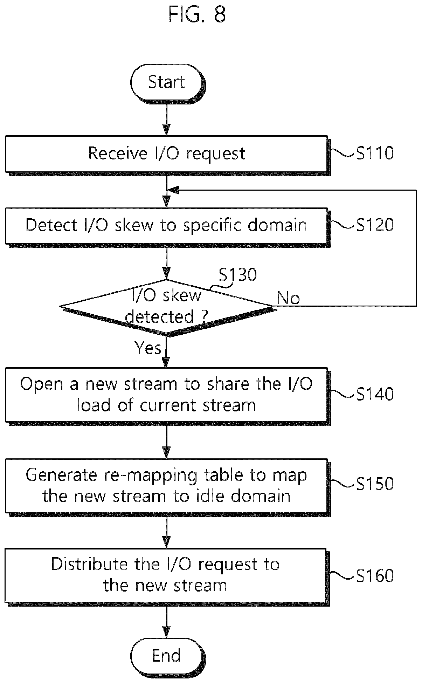

FIG. 8 is a flowchart showing a domain redirection method activated when domain imbalance is detected according to an embodiment of the present invention. Referring to FIG. 8, the storage device 1200 uses multi-domain address mapping for input/output requests provided from the host 1100. And when domain imbalance is detected, the storage controller 1210 can use a domain redirection technique to resolve the domain imbalance situation.

In step S110, the storage controller 1210 receives an input/output request from the host 1100. For example, the storage controller 1210 may receive a write request sent with a logical address (LBA or LPN) from the host 1100. Then, the domain distributor 1212 (see FIG. 2) of the storage controller 1210 allocates domains according to specific bits of the logical address. In other words, in a multi-domain type mapping that manages mapping to two domains Domain_0 and Domain_1, the domain distributor 1212 sends a write request to the first domain Domain_0 and the second domain Domain_0 according to specific bits of the logical address to assign to one of Domains. For example, the first stream Stream _0 will be opened to process write requests assigned to the first domain Domain _0. And a second stream Stream_1 will be opened to process write requests assigned to the second domain Domain_1.

In step S120, the input/output monitor 1214 (see FIG. 2) detects domain imbalance (or domain skew) of the domains distributed by the domain distributor 1212. The input/output monitor 1214 can monitor input/output performance for each domain. For example, the input/output monitor 1214 can monitor the workload or resources of each of the domains Domain_0 and Domain_1.

In step S130, the input/output monitor 1214 determines whether the workload or resources are concentrated in one of two or more domains. If domain imbalance in which input/output requests are concentrated in one domain is detected ('Yes' direction), the procedure moves to step S140. On the other hand, if it is determined that the input/output requests distributed by the domain distributor 1212 are evenly distributed among the domains ('No' direction), the procedure returns to step S120 to continuously monitor domain imbalance.

In step S140, the global block manager 1218 opens a new stream to share the load of the current stream according to the monitoring result provided from the input/output monitor 1214.

In step S150, the domain redirection unit 1216 creates a re-mapping table for mapping a new open stream. The domain redirection unit 1216 may redirect the mapping of the logical address of the input/output request determined to be domain unbalanced from the busy domain to the idle domain through the remapping table. For example, a concentration of write requests to the first domain Domain_0 may be detected. Then, the domain redirection unit 1216 may reallocate a portion (e.g., 50%) of the logical address designating the first domain Domain_0 to a memory block (or die) of the second domain Domain_1.

In step S160, the domain redirection unit 1216 transfers the load corresponding to the write request of the new stream mapped by the remapping table to the dies of the second domain Domain_1. In other words, a write operation to the second domain Domain_1 occurs according to the physical address to which the input/output request has been redirected.

As described above, according to the domain distribution method according to the present invention, load balance between domains can be implemented even when input/output requests from the host 1100 are concentrated in one domain. Accordingly, in the storage device 1200 having a multi-domain structure, performance degradation due to load concentration on a specific domain and reduction in usage rate or lifespan of dies can be prevented.

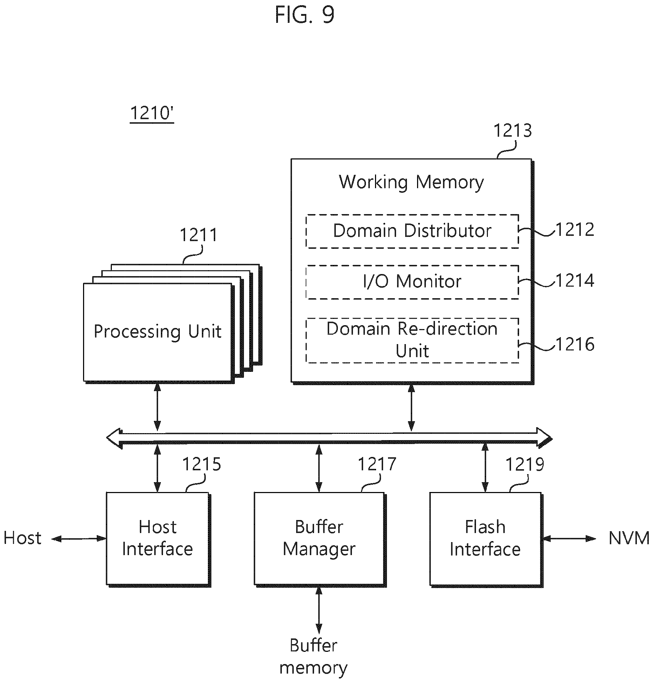

FIG. 9 is a block diagram showing another configuration method of the storage controller of FIG. 1. Referring to FIG. 9, the storage controller 1210' includes a processing unit 1211, a working memory 1213, a host interface 1215, a buffer manager 1217, and a flash interface 1219. However, it will be well understood that the components of the storage controller 1210' are not limited to the components mentioned above. For example, the storage controller 1210' may further include a read only memory ROM or an error correction code ECC unit.

The processing unit 1211 may include a central processing unit or a microprocessor. The processing unit 1211 may run software or firmware for driving the storage controller 1210'. In particular, the processing unit 1211 can drive or execute software instructions loaded into the working memory 1213. For example, the processing unit 1211 may execute software instructions such as the domain distributor 1212, the input/output monitor 1214, and the domain redirection unit 1216 loaded into the working memory 1213. In addition, the processing unit 1211 may execute core functions of the storage device 1200, such as a flash translation layer FTL.

The processing unit 1211 may be provided in a multi-core form including a plurality of CPUs. Each core can create and update the mapping table of each domain distributed according to the multi-domain method. That is, the processing unit 1211 may include a plurality of cores capable of driving a multi-domain mapping table.

Software (or firmware) or data for controlling the storage controller 1210' is loaded into the working memory 1213. Software and data loaded into the working memory 1213 are driven or processed by the processing unit 1211. In particular, according to an embodiment of the present invention, a domain distributor 1212, an input/output monitor 1214, and a domain redirection unit 1216 may be loaded into the working memory 1213. Alternatively, firmware such as a host interface layer (HIL) or flash translation layer FTL including the functions of the domain distributor 1212, input/output monitor 1214, and domain redirection unit 1216 may be loaded into the working memory 1213. The working memory 1213 may be implemented with, for example, SRAM or other non-transitory storage medium.

The domain distributor 1212 driven by the processing unit 1211 distributes I/O requests in a multi-domain manner according to specific bits of the logical address. However, in multi-domain address mapping, domain imbalance may occur depending on the logical address (LBA or LPN). This domain imbalance is detected by the input/output monitor 1214 driven by the processing unit 1211. The input/output monitor 1214 can monitor input/output performance for each domain. For example, the input/output monitor 1214 can monitor the workload or resources of each domain. If it is detected that the workload or resources are concentrated in one domain (e.g., a first domain), the input/output monitor 1214 may activate the domain redirection unit 1216 according to the monitoring result. The domain redirection unit 1216 driven by the processing unit 1211 redirects the logical address of the input/output request from the busy domain (e.g., the first domain) to the idle domain (e.g., a second domain) according to the monitoring result of the input/output monitor 1214. For this operation, the domain redirection unit 1216 or the global block manager 1218 (see FIG. 5) opens a new stream and stores the physical address of the new stream in the memory blocks (or dies) of the second domain Domain_1. For address mapping of a new stream, the domain redirection unit 1216 may create an additional mapping table or remapping table. The domain distributor 1212, the input/output monitor 1214, and the domain redirection unit 1216 perform substantially the same functions as the hardware configurations of FIG. 2 described above. Therefore, further description thereof will be omitted.

The host interface 1215 provides an interface between the host 1100 and the storage controller 1210'. The host and the storage controller 1210' may be connected through one of various standard interfaces. Here, the standard interfaces may include, but are not limited to, ATA (Advanced Technology Attachment), SATA (Serial ATA), e-SATA (external SATA), SCSI (Small Computer Small Interface), SAS (Serial Attached SCSI), PCI (Peripheral component Interconnection), and PCIe (PCI Express), USB (Universal Serial Bus), IEEE 1394, UFS (Universal Flash Storage), eMMC (Embedded Multi Media Card), NVMe, NVMe-of, NVMe-MI, etc.

The buffer manager 1217 provides a buffer function for read data or write data moving between the host interface 1215 and the flash interface 1219. The buffer manager 1217 controls the buffer memory 1250 implemented with high-capacity dynamic random access memory DRAM and can provide a DMA function or a buffer function between the non-volatile memory device 1230 and the host 1100.

Flash interface 1219 provides an interface between storage controller 1210' and non-volatile memory device 1230. For example, data processed by the processing unit 1211 is stored in the non-volatile memory device 1230 through the flash interface 1219. As another example, data stored in the non-volatile memory device 1230 may be exchanged with the storage controller 1210' through the flash interface 1219.

Configurations of the storage controller 1210' described above by way of example have been described. According to the function of the storage controller 1210' of the present invention, the domain distributor 1212, the input/output monitor 1214, and the domain redirection unit 1216 can be implemented as software that is stored in a non-transitory storage medium and executed by a processor. In some embodiments, the domain distributor 1212 can be implemented in the form of hardware logic within the storage controller 1210' and distinguish domains by referring to logical addresses. However, the domain distributor 1212 is not limited to hardware logic, and may be configured as software or a combination of software and hardware. Additionally, it will be well understood that the input/output monitor 1214 and the domain redirection unit 1216, like the domain distributor 1212, may be composed of a combination of hardware and software.

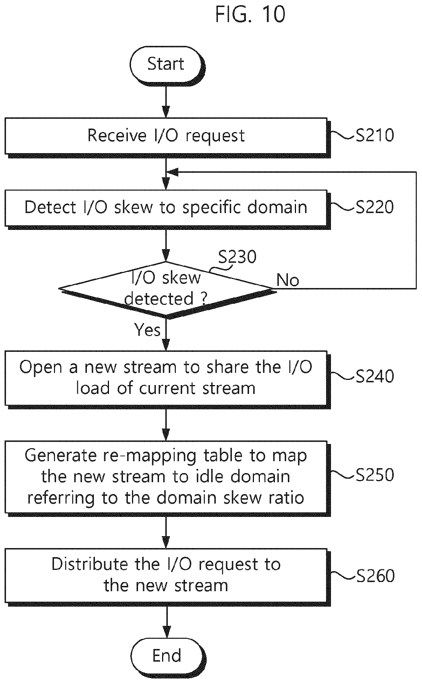

FIG. 10 is a flowchart showing a domain redirection operation according to another embodiment of the present invention. Referring to FIG. 10, when domain imbalance is detected, the storage controller 1210 may determine the domain redirection rate according to the degree of domain imbalance.

In step S210, the storage controller 1210 receives an input/output request from the host 1100. For example, the storage controller 1210 receives a write request sent with a logical address (LBA or LPN) from the host 1100. The domain distributor 1212 (see FIG. 2) of the storage controller 1210 allocates domains according to specific bits of the logical address. For example, when managing multi-domain mapping with two domains Domain _0 and Domain _1, the domain distributor 1212 allocates the write request to one of the first domain Domain _0 and the second domain Domain_1 according to specific bits of the logical address. For example, the first stream Stream _0 will be opened to process write requests assigned to the first domain Domain_0. And a second stream Stream_1 will be opened to process write requests assigned to the second domain Domain_1.

In step S220, the input/output monitor 1214 (see FIG. 2) detects imbalance of the domains distributed by the domain distributor 1212. The input/output monitor 1214 can monitor input/output performance for each domain. For example, the input/output monitor 1214 may determine domain imbalance by monitoring the workload or resources of each domain Domain 0 and Domain 1.

In step S230, the input/output monitor 1214 determines whether the workload or resources are concentrated in one of two or more domains. If domain imbalance in which input/output requests are concentrated in one domain is detected ('Yes' direction), the procedure moves to step S240. On the other hand, if it is determined that the input/output requests distributed by the domain distributor 1212 are evenly distributed among the domains ('No' direction), the procedure returns to step S220 to continuously monitor domain imbalance.

In step S240, the global block manager 1218 opens a new stream to share the load of the current stream according to the monitoring result provided from the input/output monitor 1214.

In step S250, the domain redirection unit 1216 creates a re-mapping table for mapping a new open stream. At this time, the domain redirection unit 1216 may create a remapping table according to the detected domain skew ratio. The domain redirection unit 1216 distributes write requests to domains at a predetermined or optimal distribution ratio for the imbalance ratio through a remapping table. For example, the skew ratio between the first domain Domain_0 and the second domain Domain_1 may be 3:1. This means that 75% of the write requests are distributed to the first stream Stream_0 opened in the first domain Domain_0, and 25% of the write requests are distributed to the second stream Stream_1 opened in the second domain Domain_1. At this time, the domain redirection unit 1216 may split 75% of the write requests of the first stream Stream _0 2:1 and redirect 25% of the write requests to the newly created third stream Stream_2. Then, the third stream Stream_2 is redirected to the second domain Domain_1. Ultimately, by domain redirection, write requests can be redistributed by 50% each to the first domain Domain 0 and the second domain Domain 1.

In step S260, the domain redirection unit 1216 transmits a write request for a new stream Stream_2 mapped by the remapping table to dies in the second domain Domain_1. Then, the write requests are redistributed by 50% each to the first domain Domain _0 and the second domain Domain _1 according to the redirected physical addresses. Eventually, write requests can recover from an unbalanced state (75%:25%) to a balanced state (50%:50%).

In the above, according to the domain distribution method according to the present invention, the rate of domain redirection can be adjusted according to the degree of imbalance of input/output requests from the host 1100. Therefore, load balance between domains can be implemented even in various imbalance situations.

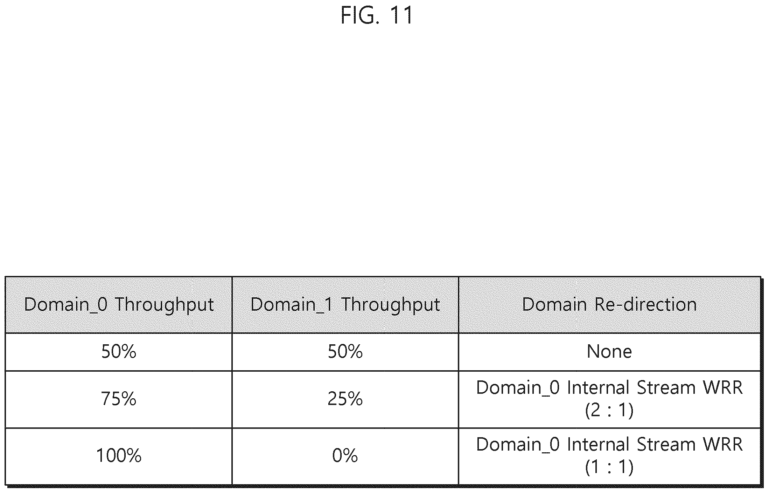

FIG. 11 is a table showing an example of a write distribution method according to the imbalance ratio for each domain. Referring to FIG. 11, the domain redirection unit 1216 (see FIG. 2) may determine the write distribution ratio of the newly created stream according to the imbalance rate of the input/output request detected by the input/output monitor 1214 (see FIG. 2). In this example, the multi-domain method is managed by two domains.

If the write request is distributed by 50% to each of the first domain Domain _0 and the second domain Domain_1 by the domain distributor 1212, domain imbalance is not detected. That is, the input/output monitor 1214 will determine that the write request is distributed to each domain in a domain balanced state. Then, domain redirection for write requests will be judged unnecessary.

If the write request is distributed to the first domain Domain _0 and the second domain Domain_1 by 75% and 25%, respectively, by the domain distributor 1212, the input/output monitor 1214 will determine domain imbalance. Then, the domain redirection unit 1216 creates a new stream to be redirected to the second domain Domain 1 within the first domain Domain_0. And the distribution ratio (e.g., Weighted Round Robin: WRR) of write requests between the existing stream and the new stream within the first domain Domain _0 will be allocated as 2:1. The new stream is mapped to dies in the second domain Domain_1. Here, Weighted Round Robin WRR can be implemented with a scheduling algorithm such as Token Control.

If the write request is distributed as 100% and 0% to the first domain Domain _0 and the second domain Domain_1 by the domain distributor 1212, respectively, the input/output monitor 1214 will determine domain imbalance. Then, the domain redirection unit 1216 creates a new stream to be redirected to the second domain Domain 1 within the first domain Domain_0. And the distribution ratio (Weighted Round Robin: WRR) of write requests between the existing stream and the new stream within the first domain Domain _0 will be allocated as 1: 1. The new stream will be mapped to dies in the second domain Domain_1. The distribution of write requests between domains can be adjusted 1: 1 through redirection of the new stream to the second domain Domain 1.

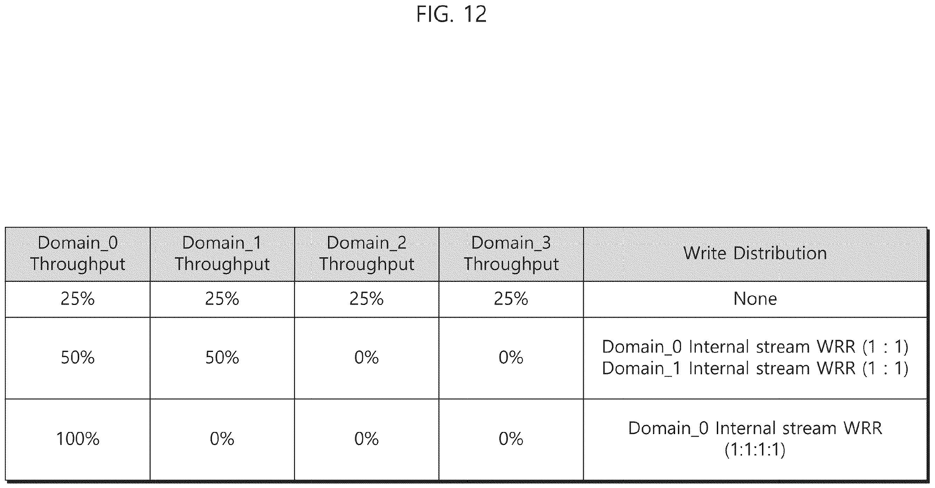

FIG. 12 is a table showing another example of a write distribution method according to the imbalance ratio for each domain. Referring to FIG. 12, a domain redirection method according to the domain imbalance ratio in the storage controller 1210 that applies the multi-domain method managed by four domains is shown.

If the write request is distributed by 25% to each of the four domains Domain_0, Domain_1, Domain_2, and Domain_3 by the domain distributor 1212, domain imbalance is not detected. That is, the input/output monitor 1214 will determine that the write request is distributed to each domain in a domain balanced state. Then, domain redirection for write requests will be judged unnecessary.

When the write request is distributed to four domains Domain_0, Domain_1, Domain_2, and Domain_3 by 50%, 50%, 0%, and 0%, respectively, by the domain distributor 1212, the input/output monitor 1214 determines domain imbalance. New internal streams for re-direction to the third domain Domain_2 and fourth domain Domain_3 must be created inside each of the first domain Domain 0 and the second domain Domain 1. The domain redirection unit 1216 creates a new stream New Stream 1 to be redirected to the third domain Domain_2 within the first domain Domain_0. Additionally, the domain redirection unit 1216 creates another new stream New Stream 2 within the second domain Domain 1 to be redirected to the fourth domain Domain_3. The domain redirection unit 1216 will allocate a distribution ratio (Weighted Round Robin: WRR) of write requests between the existing stream within the first domain Domain 0 and the new stream New Stream 1 at 1:1. The new stream New Stream 1 is mapped to dies in the third domain Domain_2. The domain redirection unit 1216 allocates a distribution ratio (e.g., Weighted Round Robin: WRR) of write requests between the existing stream within the second domain Domain 1 and another new stream New Stream 2 at 1:1. Another new stream New Stream 2 is mapped to dies in the fourth domain Domain_3. Here, Weighted Round Robin (WRR) may be implemented with a scheduling algorithm such as Token Control.

When the write request is distributed by the domain distributor 1212 to each of the four domains Domain_0, Domain_1, Domain_2, and Domain_3 by 100%, 0%, 0%, and 0%, respectively, the input/output monitor 1214 determines domain imbalance. Inside the first domain Domain_0, new internal streams must be created for re-direction to the second domain Domain_1, third domain Domain_2, and fourth domain Domain_3. The domain redirection unit 1216 will create three new streams NS_1, NS_2, and NS_3 within the first domain Domain_0. The domain redirection unit 1216 sets the distribution ratio (Weighted Round Robin: WRR) of write requests between the existing stream and the new streams NS_1, NS_2, NS_3 within the first domain Domain_0 to 1:1:1:1. The new streams NS_1, NS_2, and NS_3 are mapped to dies in the second domain Domain_1, the third domain Domain_2, and the fourth domain Domain_3, respectively. According to domain redirection, write requests can be redistributed by 25% each to the first domain Domain_0, the second domain Domain_1, the third domain Domain_2, and the fourth domain Domain_3.

In the above, a method for domain redistribution of write requests according to various domain imbalance ratios has been described as an example. However, the values of the domain imbalance ratio are illustrative values to explain the advantages of the present invention, and various changes or modifications may be possible.

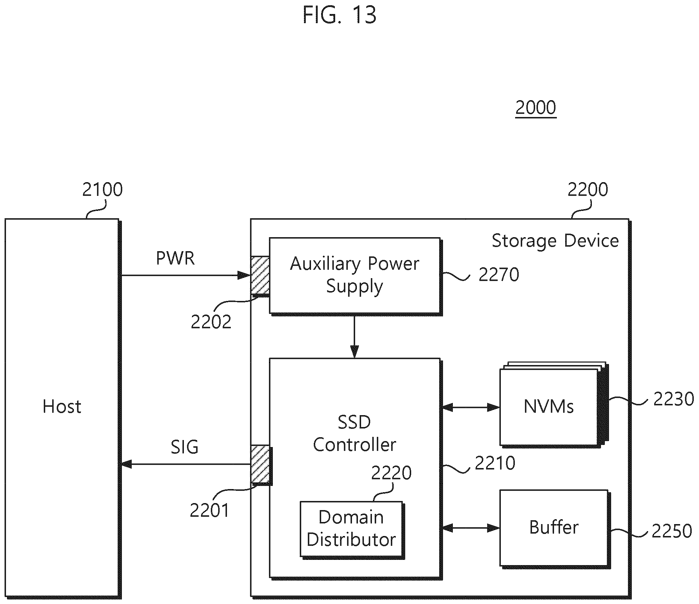

FIG. 13 is a block diagram showing a storage system according to an embodiment of the present invention. Referring to FIG. 13, the storage system 2000 includes a host 2100 and a storage device 2200 implemented as a solid state drive. In an example embodiment, the host 2100 and the storage device 2200 may be (or may be similar to) the host 1100 and the storage device 1200 described with reference to FIGS. 1 to 12. Alternatively, the host 2100 and the storage device 2200 may operate based on the operation method described with reference to FIGS. 1 to 12.

The storage device 2200 exchanges a signal SIG with the host 2100 through the signal connector 2201 and receives power PWR through the power connector 2202. The storage device 2200 includes an SSD controller 2210, a plurality of non-volatile memories 2230, a buffer memory 2250, and an auxiliary power supply device 2270.

The SSD controller 2210 may control a plurality of non-volatile memories 2230 in response to a signal SIG received from the host 2100. The plurality of non-volatile memories 2230 may operate under the control of the SSD controller 2210. The auxiliary power supply device 2270 is connected to the host 2100 through the power connector 2202. The auxiliary power supply device 2270 can receive power PWR from the host 2100 and charge it. The auxiliary power supply device 2270 may provide power to the storage device 2200 when power supply from the host 2100 is not smooth. The buffer memory 2250 may be used as a buffer memory of the storage device 2200.

In an example embodiment, storage device 2200 may include domain distributor 2220. When the workload of input/output requests from the host 2100 is concentrated in one domain, the domain distributor 2220 may perform a load balancing operation between domains within the storage device. The domain distributor 2220 may be provided in software form and loaded into the memory of the SSD controller 2210, and/or may be provided as part of the SSD controller 2210 in hardware. In addition, the non-volatile memories 2230 store data or output the stored data under the control of the SSD controller 2210.

The storage system 2000 of the present invention described above can implement load balance between domains even when input/output requests from the host 2100 are concentrated in one domain. Accordingly, in the storage device 2200 having a multi-domain structure, performance degradation due to load concentration on a specific domain, reduction in utilization of dies, and reduction in lifespan can be reduced or prevented.

Embodiments of the present invention have been described herein with reference to flowchart and/or block diagram illustrations of methods, systems, and devices in accordance with exemplary embodiments of the invention. It will be understood that each block of the flowchart and/or block diagram illustrations, and combinations of blocks in the flowchart and/or block diagram illustrations, may be implemented by computer program instructions and/or hardware operations. For example, each block in the flowchart or block diagrams may represent a segment or portion of code, which comprises one or more executable instructions for implementing the specified logical function(s). The functions noted in a block may occur out of the order shown. These computer program instructions may be provided to a processor of a general purpose computer, a special purpose computer, or other programmable data processing apparatus, such that the instructions, which execute via the processor of the computer or other programmable data processing apparatus, produce a machine for implementing the functions specified in the flowchart and/or block diagram block or blocks.

These computer program instructions may also be stored in a non-transitory computer usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart and/or block diagram block or blocks.

## Claims

1. A storage device (1200, 2200) configured to perform address mapping in a multi-domain manner, comprising:
a non-volatile memory device (1230, 2230) including a plurality of dies (Die _0-Die-7), wherein the dies (Die_0-Die-7) or memory blocks thereof are associated with a first domain (Domain_0) or a second domain (Domain_1); and
a storage controller (1210, 2210) configured to map a logical address of a write request to a first physical address mapped to the first domain (Domain_0), and responsive to detecting concentration of a workload or resource corresponding to the write request in the first domain (Domain_0) at a reference rate or more, redirect the first physical address mapped to the first domain (Domain_0) to a second physical address assigned to the second domain (Domain_1).

2. The storage device (1200, 2200) of claim 1, wherein the storage controller (1210, 2210) is configured to generate an additional stream (Stream_2) that is associated with the first domain (Domain_0) and map the additional stream (Stream_2) to a second subset (Die_4-Die-7) of the dies (Die_0-Die-7) corresponding to the second domain (Domain_1).

3. The storage device (1200, 2200) of claim 2, wherein the storage controller (1210, 2210) is configured to generate an additional mapping table (1256) for mapping the additional stream (Stream_2) to the second subset (Die_4-Die-7) of the dies (Die_0-Die-7).

4. The storage device (1200, 2200) of claim 3, further comprising:
a buffer memory (1250, 2250) configured to store the additional mapping table (1256).

5. The storage device (1200, 2200) of claim 1, wherein the write request includes write-requested data, and wherein the storage controller (1210, 2210) comprises:
a domain distributor (1212, 2220) configured to allocate a physical address of a die among the plurality of dies (Die_0-Die-7) to write the write-requested data to the first domain (Domain_0) or the second domain (Domain_1) by referring to a specific bit of the logical address;
an input/output monitor (1214) configured to monitor whether the workload or the resource corresponding to the write request is concentrated in the first domain (Domain_0) at a rate greater than the reference rate; and
a domain redirection unit (1216) configured to redirect the first physical address mapped to the first domain (Domain_0) to the second physical address assigned to the second domain (Domain_1).

6. The storage device (1200, 2200) of claim 5, wherein the domain redirection unit (1216) is configured to generate an additional stream (Stream_2) to redirect the first physical address to the second domain (Domain_1).

7. The storage device (1200, 2200) of claim 6, wherein the domain redirection unit (1216) is configured to determine a size of the additional stream (Stream_2) to be redirected according to a distribution ratio of write requests to the first domain (Domain_0) and the second domain (Domain_1).

8. The storage device (1200, 2200) of any one of claims 1 to 7, wherein the first domain corresponds to a first subset (Die_0-Die-3) of the dies (Die _0-Die-7) connected to a first channel (CH0), and the second domain corresponds to a second subset (Die_4-Die-7) of the dies (Die_0-Die-7) connected to a second channel (CH1).

9. A method of operating a storage device (1200, 2200) to perform address mapping according to a multi-domain method, the method comprising:
receiving (S 110, S210) a write request;
detecting (S120, S130, S220, S230) load imbalance among a plurality of domains (Domain_0, Domain_1) according to the write request, wherein the plurality of domains (Domain_0, Domain_1) are associated with respective subsets of memory dies (Die_0-Die-7) or memory blocks thereof;
generating (S140, S150, S240, S250) a new stream (Stream_2) in addition to an existing stream (Stream_0) of a first domain (Domain_0) of which a load is concentrated above a reference value, among the plurality of domains (Domain_0, Domain_1); and
redirecting (S160, S260) a target physical address of the new stream (Stream_2) to a memory block included in a second domain (Domain_1) among the plurality of domains (Domain_0, Domain _1).

10. The method of claim 9, wherein a first mapping table and a second mapping table are created according to specific bits of a logical address included in the write request, the first mapping table corresponds to the first domain (Domain_0), and the second mapping table corresponds to the second domain (Domain_1).

11. The method of claim 9 or 10, wherein detecting the load imbalance comprises:
monitoring a workload or resource allocated to each of the plurality of domains (Domain_0, Domain_1).

12. The method of any one of claims 9 to 11, further comprising:
generating a remapping table for redirecting a target physical address of the existing stream (Stream_0) to the target physical address of the new stream (Stream_2).

13. The method of claim 12, wherein detecting the load imbalance comprises:
detecting a load distribution ratio between the first domain (Domain_0) and the second domain (Domain_1), wherein the load distribution ratio indicates a distribution of write requests to the first domain (Domain_0) in comparison to the second domain (Domain_1).

14. The method of claim 13, wherein a size of the new stream (Stream_2) is determined according to the load distribution ratio.

15. The method of any one of claims 9 to 14, wherein a second channel (CH1) that is connected to a second subset of the memory dies (Die _4-Die-7) mapped to the new stream (Stream_2) is different from a first channel (CH0) that is connected to a first subset (Die_0-Die-3) of the memory dies (Die_0-Die-7) mapped to the existing stream (Stream_0).
